# FASCICULE DE BREVET EUROPEEN

(11) **EP 1 426 250 B1**
(45) Date de publication et mention de la délivrance du brevet: **31.05.2006**
(21) Numéro de dépôt: 03293018.2
(22) Date de dépôt: 02.12.2003
(51) Int. Cl.: B60R 21/20

(54) **Equipement comprenant une structure gonflable et un organe frangible de fixation, et véhicule automobile correspondant**
Eine aus einer aufblasbaren Struktur und einem zerbrechbaren Befestigungsbauteil bestehende Ausrüstung und damit ausgerüstetes Fahrzeug
Equipment comprising an inflatable structure and a frangible fastening member, and vehicle provided therewith

(30) Priorité: 05.12.2002 FR 0215381
(43) Date de publication de la demande: 09.06.2004
(73) Titulaire: Faurecia Industries, 92000 Nanterre (FR); SNPE, 75004 Paris Cedex 04 (FR)
(72) Inventeur: Galmiche, Etienne, 25460 Etupes (FR); Negre, David, 25230 Seloncourt (FR); Nadeau, Jean-Paul, 83190 Ollioules (FR); Laspesa, Eric, 83140 Six Fours (FR)
(74) Mandataire: Domenego, Bertrand

(56) Documents cités:
- EP-A- 0 684 164
- EP-A- 1 122 133
- DE-U- 29 921 669

## Description

La présente invention concerne un ensemble d'équipement pour véhicule automobile du type comprenant :
- une structure gonflable,
- un élément formant support de la structure gonflable,
- un élément formant plaque de répartition d'effort lors de l'impact d'un occupant du véhicule automobile sur la structure gonflable déployée, et
- au moins un organe frangible de fixation de la plaque de répartition au support, l'organe frangible étant destiné à se rompre lors du déploiement de la structure gonflable.

L'invention s'applique notamment aux ensembles d'équipement comprenant des structures gonflables de protection des genoux des occupants des véhicules automobiles.

Un ensemble du type précité est connu dans une telle application du document US-6 131 950.

Dans ce document, la structure gonflable comprend une première extrémité ouverte fixée sur le support et une seconde extrémité formée par un fond venu de matière. Le fond de la structure est fixé à la plaque de répartition d'effort. Cette fixation est assurée le long du bord de la plaque de répartition grâce à un anneau de renfort cousu dans la structure et reçu dans un rebord de la plaque de répartition.

Cet ensemble d'équipement s'avère coûteux à réaliser car il nécessite un grand nombre de pièces et une grande quantité de matière tout comme l'ensemble d'équipement décrit dans le document EP-A-1122 133.

Un but de l'invention est de résoudre ce problème en fournissant un ensemble d'équipement du type précité qui soit de coût de réalisation plus réduit.

A cet effet, l'invention a pour objet un ensemble d'équipement du type précité, caractérisé en ce que l'ensemble comprend une gaine dont une première extrémité ouverte est fixée au support et une deuxième extrémité ouverte est fixée à la plaque de répartition, la structure gonflable étant formée par la gaine et la plaque de répartition qui obture la deuxième extrémité de la gaine, et en ce que l'organe frangible comprend un voile dont une région périphérique est fixée à un premier élément parmi la plaque de répartition et le support, et dont une région centrale est fixée à un deuxième élément parmi la plaque de répartition et le support.

Selon des modes particuliers de réalisation, l'ensemble d'équipement peut comprendre l'une ou plusieurs des caractéristiques suivantes, prise(s) isolément ou selon toutes les combinaisons techniquement possibles :
- une région intermédiaire du voile située entre la région centrale et la région périphérique est une région de moindre résistance,
- la région périphérique du voile est fixée au premier élément par des moyens de serrage,
- la région centrale du voile est fixée au deuxième élément par des moyens de serrage,
- les moyens de serrage comprennent au moins un embout muni d'une tête élargie,
- la première extrémité de la gaine est fixée par pincement entre le premier élément et la région périphérique du voile,
- la deuxième extrémité de la gaine est fixée par pincement entre le deuxième élément et la région centrale du voile,
- le premier élément est le support et le deuxième élément est la plaque de répartition,
- l'ensemble constitue un ensemble de protection des genoux d'un occupant d'un véhicule automobile.

L'invention a en outre pour objet un véhicule automobile, caractérisé en ce qu'il comprend un ensemble d'équipement tel que défini ci-dessus.

L'invention sera mieux comprise à la lecture de la description qui va suivre, donnée uniquement à titre d'exemple, et faite en se référant aux figures 1 à3:
- la figure 1 étant une section longitudinale schématique d'un ensemble d'équipement selon un premier mode de réalisation de l'invention,
- la figure 2 étant une vue schématique en perspective du voile de fixation de la plaque de répartition d'effort sur le support de l'ensemble de la figure 1, et
- les figures 3 et 4 étant des vues analogues à la figure 1, à échelle réduite, illustrant le déploiement de la structure gonflable de l'ensemble de la figure 1.

Dans tout ce qui suit, les orientations utilisées sont les orientations habituelles d'un véhicule automobile. Ainsi, les termes « avant », « arrière », « haut » et « bas » s'entendent par rapport à la position d'un conducteur du véhicule automobile et à son sens de marche.

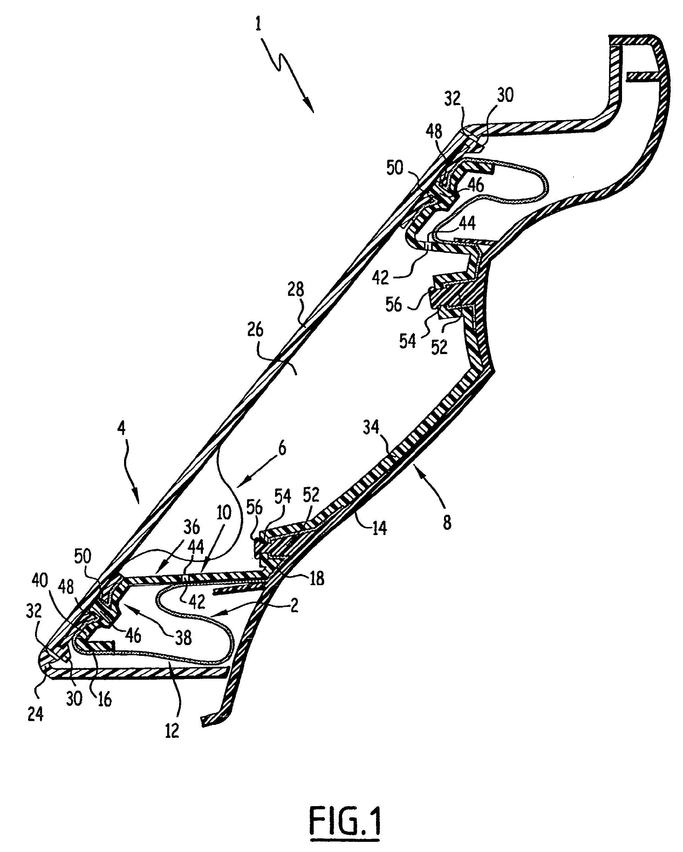

La figure 1 illustre schématiquement un ensemble d'équipement 1 pour véhicule automobile sous la forme d'une porte d'un vide-poches ou logement de réception d'objets. Ce vide-poches est prévu dans la planche de bord. La porte 1 forme donc une partie de la planche de bord. Elle est disposée sensiblement en regard des genoux d'un passager du véhicule automobile.

La porte 1 est classiquement articulée au reste de la planche de bord pour permettre d'accéder au vide-poches.

Les éléments de la planche de bord autres que la porte 1 sont classiques. Ils n'ont donc pas été représentés sur les figures et ne seront pas décrits en détail par la suite.

La porte 1 comprend essentiellement :
- une structure gonflable 2,
- un support avant 4 pour la structure gonflable 2,
- des moyens 6 de gonflage de la structure 2,
- une plaque arrière 8 de répartition d'effort lors de l'impact du passager sur la structure 2, et
- un voile frangible 10 de fixation de la plaque de répartition 8 sur le support 4.

La structure gonflable 2 comprend d'une part une gaine 12 qui forme sa paroi latérale, et comprend d'autre part la zone centrale 14 de la plaque de répartition 8 qui forme son fond comme cela sera décrit par la suite.

La gaine 12 est réalisée par exemple en un matériau tressé ou tissé et comprend une première extrémité avant 16 ouverte et une deuxième extrémité arrière 18 ouverte.

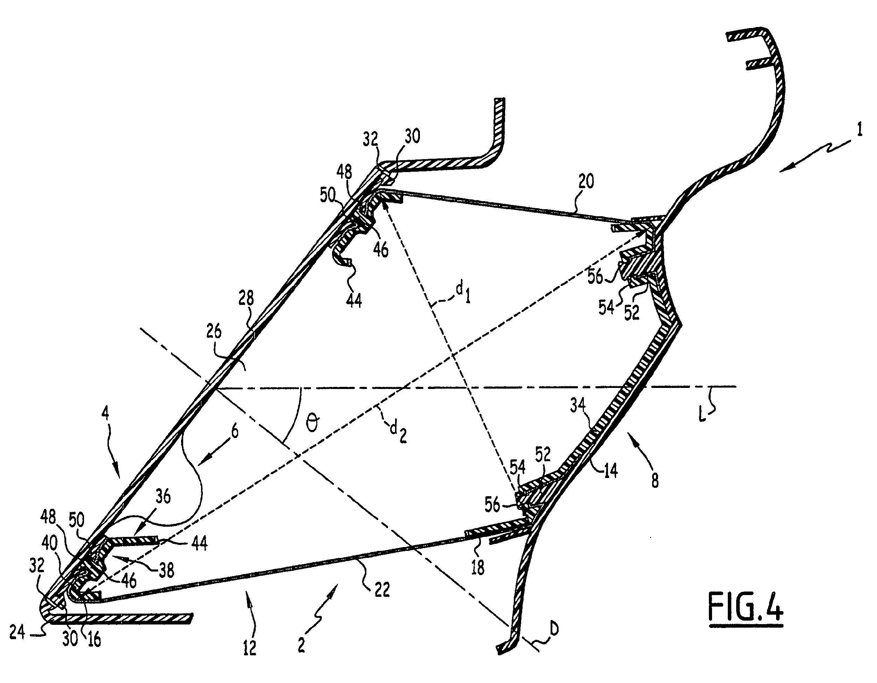

La structure 2 possède une configuration pliée représentée sur la figure 1 et une configuration déployée représentée sur la figure 4.

Dans la configuration déployée, la gaine 12 converge de son extrémité avant 16 vers son extrémité arrière 18.

La gaine 12 est alors tendue entre ses extrémités 16 et 18 et s'étend le long d'une ligne directrice médiane L sensiblement horizontale sur la figure 4. La gaine 12 a au voisinage de l'extrémité avant 16 et autour de la ligne L, un contour sensiblement rectangulaire.

La gaine 12 a au voisinage de l'extrémité arrière 18 et autour de la ligne L, un contour analogue, mais de dimensions plus faibles.

La région supérieure 20 de la gaine 12 est notablement plus courte, dans le plan de la figure 4, que la région inférieure 22 de la gaine 12.

On conçoit que les particularités géométriques décrites ci-dessus sont propres au mode de réalisation des figures 1 à 4 et peuvent, dans des variantes, être absentes.

Le support 4 forme doublure intérieure de la porte 1. Le support 4 comporte un cadre périphérique 24, délimitant intérieurement une ouverture 26, et un couvercle 28 de fermeture de l'ouverture 26.

Le cadre périphérique 24 et le couvercle 28 sont par exemple formés en matière(s) plastique(s).

Le couvercle 28 est fixé sur le cadre 24 par encliquetage de doigts 30 qui prolongent le couvercle 28 vers l'arrière et qui sont reçus dans des ouvertures 32 ménagées dans le cadre 24.

Le couvercle 28 est disposé en avant du cadre 24 et l'encliquetage a été assuré par déplacement du couvercle 28 vers l'arrière et vers le bas par rapport au cadre 24.

Les moyens 6 de gonflage de la structure 2 comprennent par exemple un générateur de gaz fixé sur le couvercle 28.

Le générateur 6 est de type classique et sa structure ne sera donc pas décrite plus en détail par la suite.

Le générateur 6 est fixé sur la face arrière du couvercle 28 et fait donc face à la plaque de répartition 8.

La plaque de répartition 8 forme, lorsque la structure 2 est en configuration pliée et la porte 1 est fermée comme représenté sur la figure 1, une partie de la surface extérieure de la planche de bord, et elle peut donc par exemple comprendre comme celle-ci une couche de matière plastique recouverte d'une peau d'habillage.

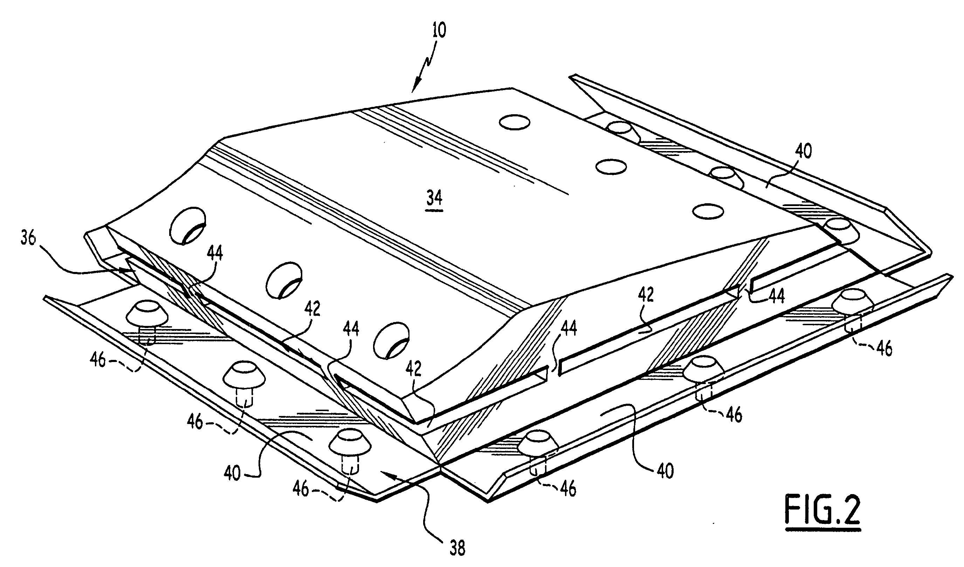

Comme illustré plus particulièrement par la figure 2, le voile de fixation 10 comprend une région centrale arrière 34 à contour sensiblement rectangulaire, une région intermédiaire 36 qui prolonge la région centrale arrière 34 vers l'avant et une région périphérique avant 38 qui prolonge la région intermédiaire 36 vers l'extérieur et qui comprend par exemple quatre pattes 40 disposées chacune sur un côté de la région intermédiaire 36.

La région intermédiaire 36 est une zone de moindre résistance.

Dans un mode de réalisation, cette zone de moindre résistance est obtenue grâce à des évidements 42 ménagés dans la région 36 et délimitant entre eux des pontets frangibles 44 reliant la région centrale 34 à la région périphérique 38.

Cette zone de moindre résistance travaille en traction pure. Ce mode de réalisation « à pontets frangibles » présente un avantage par rapport aux lignes fragilisées en « V » habituellement utilisées dans les couvercles d'air bag car, les sections des pontets frangibles 44 étant facilement calibrables, l'effort de rupture est très reproductible, et moins dépendant de la température et des conditions de gonflage de la structure.

Le voile de fixation 10 a par exemple été réalisé par moulage d'une matière plastique.

La région périphérique 38 du voile 10 est fixée au cadre 24 du support 4. Cette fixation est assurée dans l'exemple représenté par des embouts 46 qui prolongent la région périphérique 38 vers l'avant et qui sont reçus dans des orifices 48 du cadre 24. Les extrémités avant 50 des embouts 46 ont été déformées par exemple par fusion pour former des têtes élargies assurant une liaison rigide entre la région périphérique 38 du voile 10 et le cadre 24 du support 4. Les embouts 46 et leurs têtes 50 forment alors rivets de serrage du voile 10 sur le support 4.

L'extrémité avant 16 de la gaine 12 est pincée entre le cadre 24 et la région périphérique 38 du voile 10 en assurant ainsi la fixation de cette extrémité avant 16 au support 4.

On notera que les embouts 46 traversent alors des orifices ménagés dans l'extrémité avant 16 de la gaine 12 au droit des orifices 48.

De même, la région centrale 34 du voile 10 est fixée à la zone centrale 14 de la plaque de répartition 8 grâce à des embouts 52 qui prolongent la zone 14 vers l'avant et qui sont reçus dans des orifices 54 de la région centrale 34 du voile 10. Les extrémités avant 56 des embouts 52 ont été déformées par fusion pour former des têtes élargies. Les embouts 52 constituent donc des rivets de serrage du voile 10 sur la plaque 8.

L'extrémité arrière 18 de la gaine 12 est pincée entre la région centrale 34 du voile 10 et la zone centrale 14 de la plaque 8. Ainsi, l'extrémité 18 est fixée à la plaque de répartition 8. En outre, la zone 14 de la plaque de répartition 8 obture l'extrémité arrière 18 de la gaine 12 et forme donc le fond de la structure 2.

Pour réaliser la porte 1, on enfile la gaine 12 sur le voile 10 puis on fixe la région centrale 34 du voile 10 sur la plaque de répartition 8 en assurant simultanément la fixation de l'extrémité arrière 18 de la gaine 12 sur la plaque 8. On notera que la gaine 12 enfilée sur le voile 10 est alors prépositionnée. Dans une variante non-représentée, le voile 10 peut comprendre, en plus des embouts 46, des tétons de positionnement destinés à être engagés dans des ouvertures de la gaine 12.

Ensuite, on fixe le cadre 24 sur la région périphérique 38 du voile 10, ce qui permet d'obtenir simultanément la fixation de l'extrémité avant 16 de la gaine 12 au cadre 24.

Enfin, on fixe le couvercle 28, préalablement muni du générateur de gaz 6, par encliquetage sur le cadre 24.

En cas de choc détecté par un accéléromètre non-représenté raccordé au générateur de gaz 6, le fonctionnement du générateur 6 est déclenché. Le gaz produit par le générateur 6 remplit le volume intérieur de la structure 2 initialement en configuration pliée, jusqu'à ce que la pression exercée sur la région centrale 34 du voile 10 soit suffisamment importante pour rompre les pontets 44 du voile 10.

Une fois ces pontets 44 rompus, la région centrale 34 du voile 10 est séparée de sa région périphérique 38 et la plaque de répartition 8 peut se déplacer par rapport au support 4.

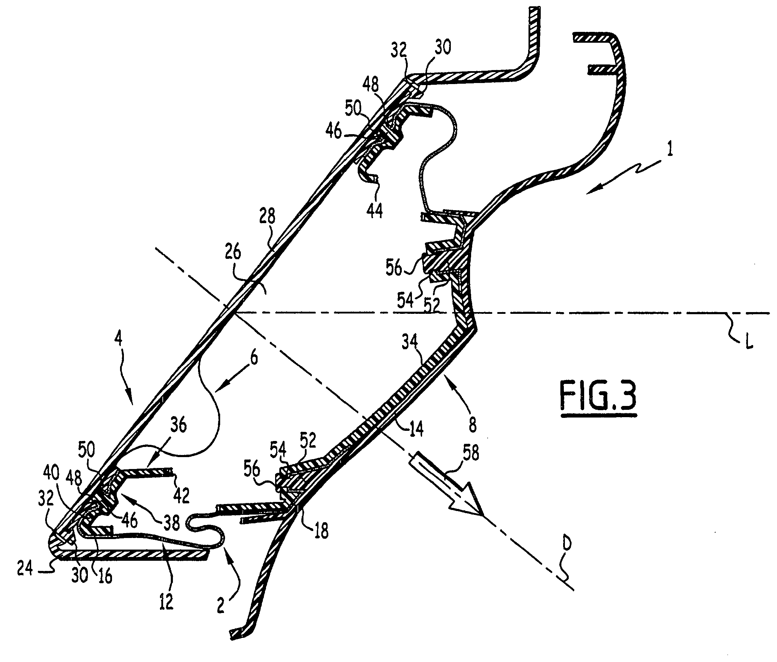

La structure 2 commence alors à se déployer comme illustré par la figure 3.

Ce déploiement initial s'effectue le long d'une direction de gonflage D sensiblement orthogonale au couvercle 28 du support 4, et donc inclinée vers le bas et vers l'arrière. Au cours de cette phase initiale du déploiement de la structure 2, la plaque de répartition 8 a donc tendance à se déplacer vers l'arrière et vers le bas, comme illustré par la flèche 58 sur la figure 3.

La diagonale d1 (en pointillés) reliant le bord supérieur de l'extrémité avant 16 de la gaine 12 au bord inférieur de l'extrémité arrière 18 de la gaine 12, va se tendre avant la diagonale d2 (en pointillés) reliant le bord inférieur de l'extrémité avant 16 au bord supérieur de l'extrémité arrière.

Les régions de côté de la gaine 12, qui relient les régions supérieure 20 et inférieures 22, et qui seront tendues le long de la diagonale d1 vont alors induire un mouvement de pivotement de la plaque de répartition 8 vers le haut, jusqu'à ce que les régions de côté soient tendues le long de la diagonale d2.

Ainsi, dans la phase terminale du déploiement de la structure 2, la plaque de répartition 8 ne se déplace plus selon la direction de gonflage D mais s'écarte progressivement de celle-ci pour venir se centrer, dans la configuration déployée de la figure 4, sur la ligne L.

La plaque de répartition 8 est donc à la fin du déploiement de la structure, située au-dessus de la direction de gonflage D, bien en face des genoux du passager. La gaine 12 est alors tendue depuis son extrémité avant 16 jusqu'à son extrémité arrière 18 de sorte que la ligne directrice L s'étend sensiblement horizontalement en formant un angle θ par rapport à la direction de gonflage D.

Ensuite, lorsque les genoux du passager viennent percuter la plaque de répartition 8, celle-ci répartit l'effort induit par les genoux sur sensiblement toute sa surface et permet ainsi à la structure 2 d'amortir de manière satisfaisante le choc des genoux du passager sur la planche de bord.

L'ensemble d'équipement 1 décrit ci-dessus présente les avantages suivants.

Grâce à l'utilisation du voile frangible 10, la plaque de répartition 8 est fixée au support 4 sans qu'un rattrapage des jeux ne soit nécessaire.

En outre, cette fixation est fiable de sorte que les jeux et les affleurements apparaissant dans le temps sont limités. Ainsi, les vibrations susceptibles d'apparaître au cours du temps lorsque le véhicule circule sont limitées.

L'aspect esthétique de l'ensemble 1 est donc satisfaisant et ce pour un coût réduit.

Par ailleurs, le voile de fixation 10 sert à la fois au pré-positionnement et à la fixation de la gaine 12 et permet donc d'atteindre des coûts de réalisation réduits.

En outre, le nombre de pièces utilisées est faible ce qui permet de diminuer d'autant les coûts de réalisation. On notera également que le moulage du voile 10 nécessite peu de parties mobiles dans le moule et que le voile 10 peut être démoulé facilement. Son coût de fabrication est donc réduit.

Pour autant, le voile 10 permet d'atteindre une rupture sous un effort relativement faible et bien déterminé.

De plus, le voile 10 forme organe de renfort de la plaque de répartition 8, ce qui permet de réduire son épaisseur et donc le coût de l'ensemble 1.

Dans d'autres variantes non-représentées, la fixation de la région centrale 34 et de la région périphérique 38 du voile 10 sur la plaque de répartition 8 et sur le support 4 peut être assurée par d'autres moyens que ceux décrits.

On peut en particulier utiliser des techniques de soudage et/ou d'encliquetage.

Dans un autre mode de réalisation non-représenté, le voile 10 peut être relié par sa région centrale au support 4 et par sa région périphérique à la plaque de répartition 8.

Par ailleurs, la gaine 12, qui est tendue dans la configuration déployée de la structure 2, forme elle-même les moyens de guidage de la structure lors de son déploiement, ce qui permet de réduire encore plus le coût de l'ensemble 1.

On notera que cette caractéristique peut être utilisée indépendamment de l'utilisation du voile frangible 10 et de la réalisation de la structure 2 sous forme d'une gaine à deux extrémités ouvertes.

Ainsi, la structure 2 peut être une structure classique à fond venu de matière avec sa paroi latérale, laquelle forme les moyens de guidage de la structure lors de son déploiement.

De manière plus générale, on notera que ces principes peuvent être utilisés pour guider la structure 2 selon une ligne directrice L qui peut être décalée latéralement et/ou verticalement par rapport à la direction de gonflage D afin d'atteindre la position finale souhaitée pour la plaque de répartition d'effort 8.

De manière générale également, la gaine 12 peut assurer, en plus du guidage de la structure déjà décrit, une modification de l'orientation de la plaque de répartition d'efforts 8 par rapport au support 4.

En effet, dans l'exemple décrit ci-dessus, la plaque 8 reste sensiblement parallèle au support 4. Toutefois, en jouant sur les longueurs des régions supérieure 20, inférieure 22 et de côté de la paroi latérale de la structure, on peut modifier l'orientation de la plaque 8 par rapport au support 4.

D'une manière plus générale encore, on peut associer des moyens auxiliaires de guidage aux moyens de guidage formés par la paroi latérale de la structure qui se tend sensiblement entre l'extrémité avant 16 et le fond 14 de la structure. Ces moyens auxiliaires de guidage peuvent comprendre un rebord de la planche de bord qui va retenir le bord inférieur ou le bord supérieur de la plaque de répartition 8 au début du gonflage de la structure.

## Revendications

1. Ensemble d'équipement (1) pour véhicule automobile, du type comprenant :
- une structure gonflable (2),
- un élément formant support (4) de structure gonflable,
- un élément formant plaque (8) de répartition d'effort lors de l'impact d'un occupant du véhicule automobile sur la structure gonflable déployée, et
- au moins un organe frangible (10) de fixation de la plaque de répartition au support, l'organe frangible étant destiné à se rompre lors du déploiement de la structure gonflable,
**caractérisé en ce que** l'ensemble comprend une gaine (12) dont une première extrémité ouverte (16) est fixée au support (4) et une deuxième extrémité ouverte (18) est fixée à la plaque de répartition (8), la structure gonflable étant formée par la gaine (12) et la plaque de répartition (8) qui obture la deuxième extrémité (18) de la gaine, et **en ce que** l'organe frangible comprend un voile (10) dont une région périphérique (38) est fixée à un premier élément parmi la plaque de répartition (8) et le support (4), et dont une région centrale (34) est fixée à un deuxième élément parmi la plaque de répartition (8) et le support (4).

2. Ensemble d'équipement selon la revendication 1, **caractérisé en ce qu'**une région intermédiaire (36) du voile (10) située entre la région centrale (34) et la région périphérique (38) est une région de moindre résistance.

3. Ensemble d'équipement selon la revendication 1 ou 2, **caractérisé en ce que** la région périphérique (38) du voile (10) est fixée au premier élément (4) par des moyens de serrage.

4. Ensemble d'équipement selon l'une des revendications précédentes, **caractérisé en ce que** la région centrale (34) du voile (10) est fixée au deuxième élément par des moyens de serrage.

5. Ensemble d'équipement selon la revendication 3 ou 4, **caractérisé en ce que** les moyens de serrage comprennent au moins un embout (46, 52) muni d'une tête élargie (50, 56).

6. Ensemble d'équipement selon l'une des revendications précédentes, **caractérisé en ce que** la première extrémité (16) de la gaine (12) est fixée par pincement entre le premier élément (4) et la région périphérique (38) du voile (10).

7. Ensemble d'équipement selon l'une des revendications précédentes, **caractérisé en ce que** la deuxième extrémité (18) de la gaine est fixée par pincement entre le deuxième élément (8) et la région centrale (34) du voile (10).

8. Ensemble d'équipement selon l'une des revendications précédentes, **caractérisé en ce que** le premier élément est le support (4) et le deuxième élément est la plaque de répartition (8).

9. Ensemble d'équipement selon l'une des revendications précédentes, **caractérisé en ce qu'**il constitue un ensemble de protection des genoux d'un occupant d'un véhicule automobile.

10. Véhicule automobile, **caractérisé en ce qu'**il comprend un ensemble d'équipement selon l'une des revendications précédentes.

## Claims

1. Equipment assembly (1) for a motor vehicle, of the type comprising:
- an inflatable structure (2),
- an element (4) forming a support for the inflatable structure,
- an element (8) forming a plate for distribution of the load during the impact of an occupant of the motor vehicle on the deployed inflatable structure, and
- at least one frangible member (10) for fixing the load distribution plate to the support, the frangible member being intended to break during the deployment of the inflatable structure,
**characterised in that** the assembly comprises a sheath (12), of which an open first end (16) is fixed to the support (4) and an open second end (18) is fixed to the load distribution plate (8), the inflatable structure being formed by the sheath (12) and the load distribution plate (8) which closes off the second end (18) of the sheath, and **in that** the frangible member comprises a web (10), a peripheral region (38) of which is fixed to a first element from amongst the load distribution plate (8) or the support (4), and a central region (34) of which is fixed to a second element from amongst the load distribution plate (8) and the support (4).

2. Equipment assembly as claimed in Claim 1, **characterised in that** an intermediate region (36) of the web (10) situated between the central region (34) and the peripheral region (38) is a region of lower resistance.

3. Equipment assembly as claimed in Claim 1 or 2, **characterised in that** the peripheral region (38) of the web (10) is fixed to the first element (4) by clamping means.

4. Equipment assembly as claimed in any one of the preceding claims, **characterised in that** the central region (34) of the web (10) is fixed to the second element by clamping means.

5. Equipment assembly as claimed in Claim 3 or 4, **characterised in that** the clamping means comprise at least one end piece (46, 52) provided with an enlarged head (50, 56).

6. Equipment assembly as claimed in any one of the preceding claims, **characterised in that** the first end (16) of the sheath (12) is fixed by being trapped between the first element (4) and the peripheral region (38) of the web (10).

7. Equipment assembly as claimed in any one of the preceding claims, **characterised in that** the second end (18) of the sheath is fixed by being trapped between the second element (8) and the central region (34) of the web (10).

8. Equipment assembly as claimed in any one of the preceding claims, **characterised in that** the first element is the support (4) and the second element is the distribution plate (8).

9. Equipment assembly as claimed in any one of the preceding claims, **characterised in that** it constitutes an assembly for protection of the knees of an occupant of a motor vehicle.

10. Motor vehicle, **characterised in that** it comprises an equipment assembly as claimed in any one of the preceding claims.

## Patentansprüche

1. Ausrüstung (1) für ein Kraftfahrzeug der Art mit:
- einer aufblasbaren Struktur (2),
- einem Element (4), das einen Träger für die aufblasbare Struktur bildet,
- einem Element, das eine Platte (8) zur Verteilung der Druckbelastung während des Aufpralls eines Insassen des Kraftfahrzeugs auf die entfaltete aufblasbare Struktur bildet,
- zumindest einem zerbrechbaren Bauteil (10) zur Befestigung der Verteilungsplatte an dem Träger, wobei das zerbrechbare Bauteil dafür bestimmt ist während des Entfaltens der aufblasbaren Struktur zu zerbrechen,
**dadurch gekennzeichnet, dass** die Ausrüstung eine Hülle (12) aufweist, deren erstes offenes Ende (16) an dem Träger (4) befestigt ist und deren zweites offenes Ende (18) an der Verteilungsplatte (8) befestigt ist, wobei die aufblasbare Struktur von der Hülle (12) und der Verteilungsplatte (8), die das zweite Ende (18) der Hülle verschließt, gebildet ist, und dass das zerbrechbare Bauteil eine Abdeckung (10) aufweist, deren Umfangsbereich (38) an einem ersten Element aus Verteilungsplatte (8) und Träger (4) befestigt ist, und deren Mittelbereich (34) an einem zweiten Element aus Verteilungsplatte (8) und Träger (4) befestigt ist.

2. Ausrüstung gemäß Anspruch 1, **dadurch gekennzeichnet, dass** ein Zwischenbereich (36) der Abdeckung (10), der zwischen dem Mittelbereich (34) und dem Umfangsbereich (38) angeordnet ist, ein Bereich von geringerem Widerstand ist.

3. Ausrüstung gemäß Anspruch 1 oder 2, **dadurch gekennzeichnet, dass** der Umfangsbereich (38) der Abdeckung (10) an dem ersten Element (4) mit Hilfe von Klemmvorrichtungen befestigt ist.

4. Ausrüstung gemäß einem der vorherigen Ansprüche, **dadurch gekennzeichnet, dass** der Mittelbereich (34) der Abdeckung (10) an dem zweiten Element mit Hilfe von Klemmvorrichtungen befestigt ist.

5. Ausrüstung gemäß Anspruch 3 oder 4, **dadurch gekennzeichnet, dass** die Klemmvorrichtungen zumindest einen Ansatz (46, 52) umfassen, der mit einem vergrößerten Kopf (50, 56) versehen ist.

6. Ausrüstung gemäß einem der vorherigen Ansprüche, **dadurch gekennzeichnet, dass** das erste Ende (16) der Hülle (12) durch Einklemmen zwischen dem ersten Element (4) und dem Umfangsbereich (38) der Abdeckung (10) befestigt ist.

7. Ausrüstung gemäß einem der vorherigen Ansprüche, **dadurch gekennzeichnet, dass** das zweite Ende (18) der Hülle durch Einklemmen zwischen dem zweiten Element (8) und dem Mittelbereich (34) der Abdeckung (10) befestigt ist.

8. Ausrüstung gemäß einem der vorherigen Ansprüche, **dadurch gekennzeichnet, dass** das erste Element der Träger (4) und das zweite Element die Verteilungsplatte (8) ist.

9. Ausrüstung gemäß einem der vorherigen Ansprüche, **dadurch gekennzeichnet, dass** sie eine Schutzausrüstung für die Knie eines Insassen eines Kraftfahrzeugs bildet.

10. Kraftfahrzeug, **dadurch gekennzeichnet, dass** es eine Ausrüstung gemäß einem der vorherigen Ansprüche aufweist.
